# EUROPEAN PATENT APPLICATION

(11) **EP 4 763 388 A1**
(43) Date of publication of application: **24.06.2026**
(21) Application number: 24221625.7
(22) Date of filing: 19.12.2024
(51) Int. Cl.: B23B 51/06, B23B 51/02

(54) **DRILL POINT**

(71) Applicant: Seco Tools AB, 737 82 Fagersta (SE)
(72) Inventor: FREJD, Stefan, SE-737 82 Fagersta (SE)
(74) Representative: Sandvik

(57) **Abstract**

A drill point (1) for metal cutting comprising a body, which body has central longitudinal axis extending rearward from the front end and is rotatable around the central longitudinal axis (3) in a direction of rotation (2). The body comprises one or more cutting structures. Each cutting structure comprises a cutting edge (6), which comprises a radially inner cutting edge (9) and a radially outer cutting edge (10); a chip flute (7); and a thinning surface (8), which extends axially forward and radially inward from the chip flute (7). The thinning surface (8) comprises an exit opening (20) for discharging cutting fluid, which exit opening is delimited by an opening edge consisting of a radially inner opening edge (21) and a radially outer opening edge (22); a secondary thinning rake surface (17), which, on a rotationally leading side of a thinning bottom (16), extends radially outward from the thinning bottom (16) and comprises at least a radially inner portion of the inner opening edge (21); a thinning main surface (18), which extends radially inward toward the secondary thinning rake surface (17) and comprises the outer opening edge (22). As seen in a cross section, a secondary tangent (25) is a tangent to the secondary thinning rake surface (17) at the radially inner opening edge (9), wherein the secondary tangent (25) is rotationally rearward of the outer opening edge (22).

## Description

### Technical field

The present invention relates to a drill point for metal cutting.

### Background

A wide range of components are machined from many different types of material, such as metal, composites or combinations thereof. Accordingly, a variety of different cutting tools, and in particular drill points for, or as part of, drilling tools have been developed. Drill points typically comprise two diametrically opposite cutting edges, which, when operated, cut a hole in a workpiece. In order to enhance tool life, it is known to provide the drill point with internal channels for supplying coolant to the cutting edges.

A drill tool comprising a drill point is known from CN 105436578 B. The drill point comprises radially inner and radially outer coolant channels. The radially outer coolant channels each have an opening in one respective axially forward facing clearance surface. The radially inner coolant channels each have an opening in one respective thinning surface. A problem with this known drill point is that chips cut by the cutting edges get stuck in the openings of the radially inner coolant channels and eventually clog them. Thereby, exit of coolant is obstructed, which causes insufficient cooling of the cutting edges. Insufficient cooling of the cutting edge negatively affects tool life.

### Summary

It is an object of the present invention to mitigate the shortcomings of the prior art and to provide a drill point with improved supply of cutting fluid.

This object is achieved according to the invention by means of a drill point according to claim 1.

A proposed drill point for metal cutting comprises a body, which
- body has a front end and a central longitudinal axis extending rearward from the front end,
- body is rotatable around the central longitudinal axis in a direction of rotation, and wherein the central longitudinal axis defines an axial direction and a radial direction, and
- body comprises one or more cutting structures,
wherein each cutting structure comprises
- a cutting edge, which extends radially outward from the central longitudinal axis, and comprises a radially inner cutting edge and a radially outer cutting edge, wherein the cutting edge defines a cutting diameter,
- a chip flute which extends axially rearward from the radially outer cutting edge,
- a thinning surface, which extends axially forward and radially inward from the chip flute, wherein the thinning surface comprises
   - an exit opening for discharging cutting fluid, which exit opening is delimited by an opening edge consisting of a radially inner opening edge and a radially outer opening edge,
   - a central, axially extending thinning bottom,
   - a primary thinning rake surface, which, on a rotationally trailing side of the thinning bottom, extends from the thinning bottom axially forward to the inner cutting edge,
   - a secondary thinning rake surface, which, on a rotationally leading side of the thinning bottom, extends radially outward from the thinning bottom and comprises at least a radially inner portion of the inner opening edge,
   - a thinning main surface, which extends radially inward toward the secondary thinning rake surface and comprises the outer opening edge,
wherein, as seen in a cross section, a secondary tangent is a tangent to the secondary thinning rake surface at the inner opening edge, wherein the secondary tangent is rotationally rearward of the outer opening edge.

During operation, radially inner cutting edges are particularly exposed to heat. Therefore, because of the proximity of the thinning surface to the radially inner cutting edges, it is advantageous to locate exit openings for cutting fluid in them. It has been found that one reason for chips clogging exit openings in the thinning surface is the direction of flow that chips cut by the inner cutting edges have when they flow over the thinning surface. Specifically, chips cut by an inner cutting edge of a drill point first flow mainly axially rearward along a primary thinning rake surface, which is located directly axially rearward of the inner cutting edge. Then, the chips continue to flow radially outward along a secondary thinning rake surface and cross the exit opening toward a thinning main surface. When the chips reach the inner opening edge, they continue over the exit opening itself in the direction that the secondary thinning rake surface has at the inner opening edge. Thus, the chips flow over the exit opening in a direction of a secondary tangent, which is a tangent to the secondary thinning rake surface at the inner opening edge. In prior art drill points, after crossing the exit opening, the chips reach the outer opening edge and preferably continue toward the thinning main surface. However, some chips get caught by the outer opening edge and eventually clog the exit opening.

According to the inventive drill point, thanks to that the secondary tangent is rotationally rearward of the outer opening edge, the chips pass over the outer opening edge at a distance. Therefore, chips flow over the exit opening without getting stuck against the outer opening edge. Thereby flow of cutting fluid, for example coolant, to the cutting edges is unobstructed and tool life of the drill point is increased.

The suggested drill point is suitable for metal cutting, such as chip removing metal cutting. The drill point is especially suitable for machining operations that benefit from reducing the heat at radially inner cutting edges by cooling with coolant fluid. Examples of such processes are machining of workpieces from light alloys, such as aluminium based alloys. Preferably, the drill point comprises a wear resistant material such as for example coated or non-coated cemented carbide, cermet, ceramic, CBN or steel.

The drill point comprises a body which is rotatable around a central axis of rotation in a direction of rotation. The direction of rotation is to be understood as a cutting direction during machining of a work peace. As seen in the direction of rotation, features of the drill point are leading or trailing relative each other. The central longitudinal axis defines an axial direction and a radial direction. In order to drill a hole in a workpiece, the drill point is typically operated with feed in the axial direction only. A cross section is to be understood as section perpendicular to the central longitudinal axis.

Optionally, the drill point is a one-piece integral part of a drill tool, sometimes referred to as a "solid round tool", or the drill point is an exchangeable head that is connectable to a drill tool body. Preferably, a solid round tool including the drill point, or an exchangeable head with the drill point, both further comprises a shaft at a rear end for mounting the drill point to a machine spindle, which for example is part of a CNC machine.

The body of the drill point comprises one or more cutting structures. Each cutting structure comprises a cutting edge, a chip flute, and a thinning surface.

The cutting edge extends radially outward from the central longitudinal axis and comprises a radially inner cutting edge and a radially outer cutting edge. Preferably, the inner cutting edge extends radially outward from the central longitudinal axis and may include a portion of a chisel edge. Preferably, the outer cutting edge extends radially outward from a radially outer end of the inner cutting edge to a point on a maximal diameter of the drill point. The maximal diameter of the drill point is a cutting diameter.

The chip flute extends axially rearward from the radially outer cutting edge and is preferably a surface recessed in the periphery of the body of the drill point. Optionally, the chip flute is helical or straight in relation to the central longitudinal axis. The diameter of the periphery of drill point preferably decreases axially rearward to provide a back-taper. Drill tools with helical chip flutes are sometimes referred to as "twist drills". Preferably, the drill point is comprised in a twist drill, which preferably is in form of a solid round tool.

In the cutting structure of the drill point, the thinning surface extends axially forward and radially inward from the chip flute. Optionally, portions of the thinning surface are planar, or have a curvature, for example as seen in axial and/or longitudinal cross sections.

The thinning surface comprises a primary thinning rake surface at the inner cutting edge. During production of the drill point, the primary thinning rake surface is ground in a central web of the drill point in order to create the radially inner cutting edge. Thus, the inner cutting edge is formed in the web, which is radially inward of the chip flute. Optionally, the primary thinning rake surface is positive or negative.

The thinning surface comprises a thinning bottom which extends axially rearward in a central area of the thinning surface. Preferably, the thinning bottom extends axially rearward from a central portion of the inner cutting edge, for example the chisel edge. Preferably, the thinning bottom is inclined radially outward such that an axially rear end the thinning bottom intersects a front end of the chip flute. The thinning bottom has a rotationally leading side and a rotationally trailing side. On the trailing side, the primary thinning rake surface extends from the thinning bottom axially forward to the inner cutting edge. For example, the primary thinning rake surface is generally triangular, wherein a radially inner side borders the trailing side of the thinning bottom, an axially upper side borders the inner cutting edge, and a radially outer side borders the chip flute.

The thinning surface further comprises a secondary thinning rake surface and a thinning main surface. On a rotationally leading side of the thinning bottom, the secondary thinning rake surface extends radially outward from the thinning bottom. The thinning main surface extends radially inward, toward the secondary thinning rake surface. Preferably, the thinning main surface extends radially inward from a periphery of the drill point, for example from an axially extending land. Preferably, both the secondary thinning rake surface and the thinning main surface, border and extend axially forward from the chip flute.

The thinning surface comprises an exit opening for discharging cutting fluid. The cutting fluid may be any suitable fluid such as coolant and/or lubricant in form of a liquid, a gas, or a mixture thereof. The exit opening is delimited by an opening edge consisting of radially inner opening edge and a radially outer opening edge. The inner opening edge is to be understood as a portion of the opening edge comprising a radially innermost point of the opening edge, and the outer opening edge is to be understood as a portion of the opening edge comprising a radially outermost point of the opening edge. The secondary thinning rake surface comprises at least a radially inner portion of the inner opening edge, and the thinning main surface comprises the outer opening edge. As will be explained below, in embodiments, an optional intermediate step portion comprises a radially outer portion of the inner opening edge.

Preferably, a cutting fluid channel extends inside the body of the drill point axially rearward from the exit opening. The shape of the exit opening as delimited by the opening edge is determined by the shape of the intersection of the fluid channel with the relevant surfaces of the thinning surface. The opening edge of the exit opening is for example generally oval with a minor axis extending mainly radially. This shape is typically generated by a circular fluid channel. Other example shapes of the opening edge are circular and polygonal.

As seen in a cross section, a secondary tangent is a tangent to the secondary thinning rake surface at the inner opening edge, and a main tangent is a tangent to the thinning main surface at the outer opening edge. As seen in the cross section, the secondary thinning surface and the thinning main surfaces are lines, which optionally are curved or straight. A tangent is to be understood as a continuation of the line representing the respective surface in the direction it has at the respective point representing the opening edge. As seen in the cross section, the secondary tangent is rotationally rearward of the outer portion of the opening edge.

According to an embodiment, a shortest distance from the primary thinning rake surface to the inner opening edge is at most 10 % of the cutting diameter. It is preferable to have cutting fluid, especially coolant, existing as close as possible to the center of the drill point in order to efficiently supply coolant to the radially inner cutting edge.

Preferably, a shortest distance from the primary thinning rake surface to the inner opening edge is at least 2% of the cutting diameter. A smaller distance may leave insufficient space for effective chip formation at the secondary thinning rake surface.

According to an embodiment, the exit opening has a center, wherein a distance from the center to the opening edge is at most 5% of the cutting diameter. Larger distances may cause reduced efficiency for cooling and lubrication. A center is to be understood as a center of an area delimited by the opening edge.

According to an embodiment, the outer opening edge is 45 - 55% of the of the opening edge. Thereby about half of the opening edge is located in the thinning main surface and protected from cut chips, while allowing for about half of the inner opening edge to be positioned in the secondary thinning rake surface, so that coolant can be efficiently supplied to the inner cutting edge. This is a favorable tradeoff between two desired properties.

Preferably, the thinning surface comprises exactly one exit opening. Alternatively, the thinning surface comprises several openings, which preferably are arranged axially. For example, each exit opening has a center which are aligned, and/or each inner opening edge has the same shortest distance to the primary thinning rake surface.

According to an embodiment, the thinning surface further comprises a thinning step surface, which intersects the exit opening edge and connects a radially outer portion of the secondary thinning rake surface with a radially inner portion of the thinning main surface. One way to achieve that the secondary tangent is rotationally rearward of the outer opening edge in the thinning main surface, is to grind the thinning main surface to become set back rotationally forward relative the secondary thinning surface, and thereby create a step surface between the two surfaces. This grinding method allows to choose angular extension of the secondary thinning surface and the thinning main surface freely and independent from each other. In embodiments with a thinning step surface, a radially outer portion of the inner opening edge is located in the thinning step surface. This portion connects the radially inner portion of the inner opening edge and the outer opening edge on one or both axial ends.

According to an embodiment, as seen in a cross section, the main tangent and the secondary tangent are parallel These embodiments allow for efficient grinding, since at least one angle can be kept constant during grinding.

According to an embodiment, a distance from the main tangent to the secondary tangent is equal in all cross sections along an axial extension of the exit opening. Alternatively, a distance from the main tangent to the secondary tangent increases the further axially forward along an axial extension of the exit opening the cross section is located. These embodiments provide alternatives such that the secondary thinning rake surface and the thinning main surface can be adapted to other design criteria of the drill point, such as for example the extension of the chip flutes.

Preferably, the distance from the main tangent to the secondary tangent is 1 - 3% of cutting diameter. A shorter distance may not be enough to ensure that cut chips do not contact the outer opening edge, and a larger distance may negatively affect the flow of chips into the chip flute.

According to an embodiment, as seen in a cross section, the main tangent and the secondary tangent diverge radially outward. This embodiment allows to implement the invention without grinding a thinning step surface, such that less material is removed during grinding. Preferably, an angle between the main tangent and the secondary tangent is 10 - 30°. A smaller angle may not be enough to ensure that cut chips do not contact the outer opening edge, and a larger angle and a larger distance may negatively affect the flow of chips into the chip flute.

Preferably, as seen in each cross section along an axial extension of the inner opening edge, the secondary tangent coincides with a linear line of intersection of the secondary thinning rake surface with the axial plane of the cross section. In other words, at least a portion of the secondary thinning rake surface is located in a plane. Preferably, the main tangent coincides with a linear line of intersection of the thinning main surface with the axial plane of the cross section. In other words, at least a portion of the thinning main surface is located in a plane. Planar surfaces are beneficial for grinding.

According to an embodiment, the body comprises two of the cutting structures, which achieves a balanced drill point. Each of the two cutting structures preferably comprises a clearance surface extending rotationally rearward from the respective cutting edge to, at a radially inner end, the secondary thinning surface, and, at a radially outward end, the thinning main surface of the cutting structure rotationally rearward thereof.

### Brief description of the drawings

In the following, example embodiments will be described in greater detail and with reference to the accompanying drawings, in which:
Fig. 1 is a side view of twist drill comprising a drill point according to a first embodiment of the present invention,
Fig. 2 is a top view of the twist drill of Fig. 1;
Fig. 3 is a perspective front end view of a front end portion of the twist drill of Fig. 1;
Fig. 4 is a cross sectional view at an exit opening as indicated;
Fig. 5 is a perspective front end view of a front end portion of a twist drill comprising a drill point according to a second embodiment;
Fig. 6 shows two cross sectional views of the second embodiment at an exit opening as indicated;
7 is a perspective front end view of a front end portion of a twist drill comprising a drill point according to a third embodiment;
Fig. 8 show a cross sectional view of the third embodiment at an exit opening as indicated.

All the figures are schematic, not necessarily to scale, and generally only show parts which are necessary in order to elucidate the respective embodiments, whereas other parts may be omitted or merely suggested. Unless otherwise indicated, like reference numerals refer to like parts in different figures.

### Detailed description

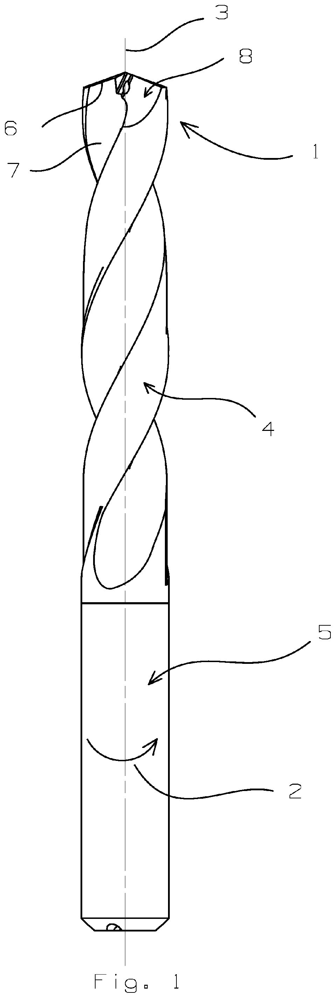

Figs. 1 - 4 show a twist drill comprising a drill point 1 according to a first embodiment of the present invention. The twist drill is rotatable around a central axis of rotation 3 in a direction of rotation 2. The drill point 1 comprises a body, which, from an axial front end of the twist drill, extends axially rearward along the central longitudinal axis. The twist drill comprises further a chip flute section 4 extending axially rearward from the drill point, and a shaft 5 extending axially rearward from the chip flute section 4. The drill point, due to being comprised in the twist drill, is mountable to a machine spindle, which for example is part of a CNC machine, by means of the shaft 5. The twist drill is a one-piece integral unit comprising coated cemented carbide, and is suitable for machining workpieces from light alloys, such as aluminium based alloys.

The drill point 1 comprises in total two cutting structures, each including one respective cutting edge 6, one respective chip flue 7, and one respective thinning surface 8. The two cutting structures are arranged diametrically opposite each other and have a 180° rotational symmetry. Therefore, only one of the cutting structures is described below.

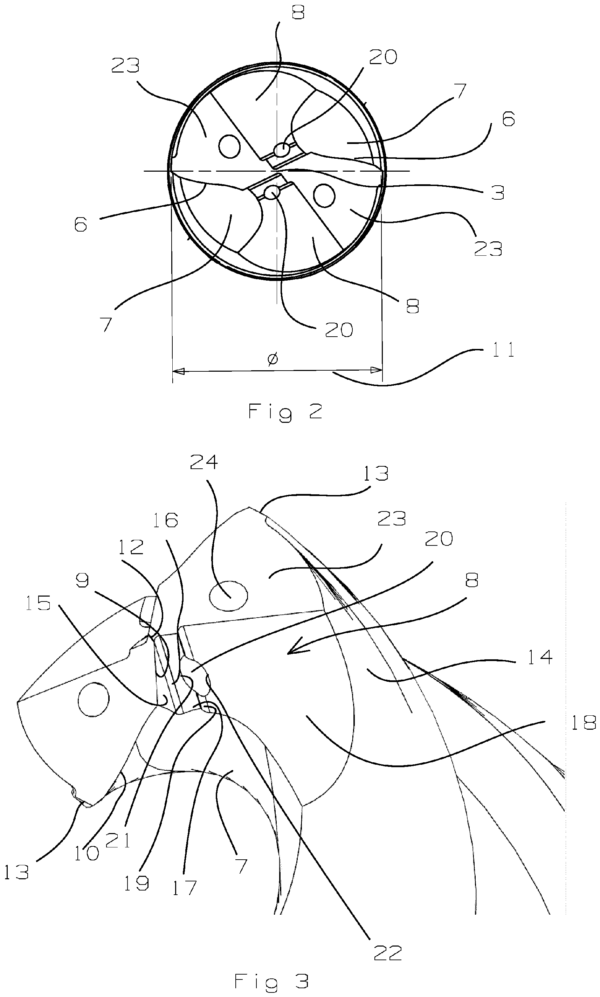

The cutting edge 6 extends radially outward from the central longitudinal axis 3 and comprises a radially inner cutting edge 9 and a radially outer cutting edge 10, c.f. Fig 3. The inner cutting edge 9 extends radially outward from the central longitudinal axis 3 and includes a portion of a chisel edge 12. The outer cutting edge 10 extends radially outward from a radially outer end of the inner cutting edge 9 to a point on a maximal diameter of the drill point. The maximal diameter of the drill point is a cutting diameter 11, c.f. Fig. 2, which in the shown example is 12 mm. A margin surface 13 extends axially rearward from the radially outer end of the cutting edge 6, which margin surface 13, rotationally rearward, is followed by a body clearance surface 14. The chip flute 7 is helical and extends axially rearward from the radially outer cutting edge 10.

The thinning surface 8 extends axially forward and radially inward from the chip flute 7, and comprises a primary thinning rake surface 15, a thinning bottom 16, a secondary thinning rake surface 17, a main thinning rake surface 18, and a thinning step surface 19.

The thinning bottom 16 extends axially rearward from the chisel edge 12 in a central area of the thinning surface 8. The thinning bottom 16 is formed by an axially extending rounded corner surface, wherein the thinning bottom 16 has a rotationally leading side and a rotationally trailing side. The thinning bottom 16 is inclined radially outward such that an axially rear end the thinning bottom intersects a front end of the chip flute 7.

The primary thinning rake surface 15 is generally triangular, wherein a radially inner side borders the trailing side of the thinning bottom 15, an axially upper side borders the inner cutting edge 9, and a radially outer side borders the chip flute7. The primary thinning surface 15 is a planar surface, wherein the primary thinning rake surface 15 is parallel with the central longitudinal axis 3 in order to form a negative rake surface for the inner cutting edge 9.

On a rotationally leading side of the thinning bottom 16, the secondary thinning rake surface 17 extends radially outward from the thinning bottom 16. The thinning main surface 18 extends radially inward from a periphery of the drill point toward the secondary thinning rake surface 17. The thinning step surface 19 connects a radially outer portion of the secondary thinning rake surface 17 with a radially inner portion of the thinning main surface 18. The secondary thinning rake surface17, the thinning step surface 19 and the thinning main surface 18, each border and extend axially forward from the chip flute 7.

Each of the two cutting structures comprises further a clearance surface 23, which extends rotationally rearward from one respective cutting edge 6 to, at a radially inner end, the secondary thinning surface 17, and, at a radially outward end, the thinning main surface 18 of the cutting structure rotationally rearward thereof.

The twist drill further comprises a cutting fluid channel for delivering coolant liquid to the drill point 1. The channel comprises two openings in each cutting structure in form of an exit opening 20 in the thinning surface 8 and a second opening 24 in the clearance surface 23. The exit opening 20 is mainly for discharging coolant liquid toward the inner cutting edge, and the second opening 24 is mainly for discharging coolant liquid to enhance chip flow in the chip flutes 7.

The exit opening 20 is delimited by an opening edge consisting of radially inner opening edge 21 and a radially outer opening edge 22. A radially inner portion of the inner opening edge 21 is located in the secondary thinning rake surface 17, and a radially outer portion of the inner opening edge 21 is located in the thinning step surface 19. The outer opening edge 22 is located in the thinning main surface 18. The opening edge is generally oval with a minor axis in the radial direction and a center 30 of the exit opening is at the intersection of the minor axis with a major axis. A total length of the outer opening edge 22 is 50% of the of the opening edge. A distance 29 from the center 30 to the opening edge is at most 5% and in the shown example 1.2 mm. A shortest distance 27 from the primary thinning rake surface to the inner opening edge 21 is 0.1 mm, which is less than 10 % of cutting diameter 11.

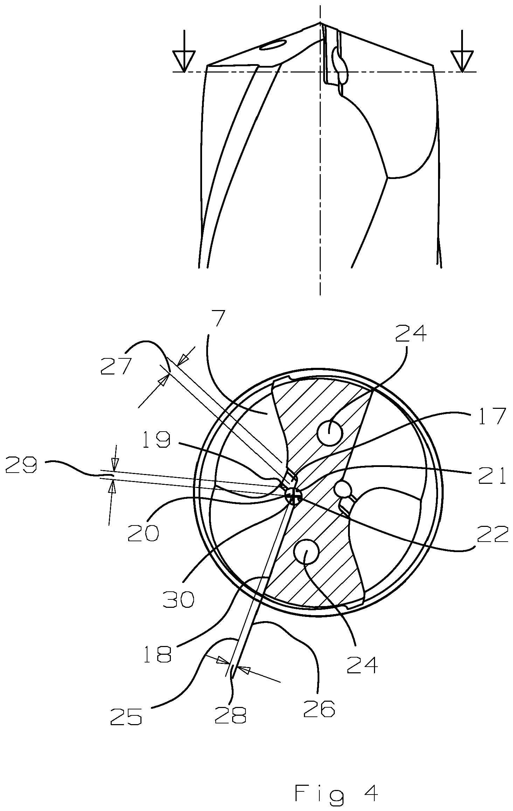

Each of the primary thinning rake surface 15, the secondary thinning rake surface 17 and the main thinning rake surface 18 are planar. As seen in the cross section of Fig. 4, each of the surfaces 15, 17, 18 has a linear line of intersection with the axial plane of the cross section. The thinning step surface 19 appears as curve in the cross section due to the exit opening 20 but is also a planar surface. A secondary tangent 25 is a tangent to the secondary thinning rake surface 17 at the inner opening edge 21, and a main tangent 26 is a tangent to the thinning main surface 18 at the outer opening edge 22. In the shown first embodiment, the secondary tangent 25 coincides with the linear line of intersection of the secondary thinning surface 17, and the main tangent 26 coincides with the linear line of intersection of the thinning main surface 18.

As seen in the cross section, the secondary tangent 25 is rotationally rearward of the outer portion of the opening edge 22. The secondary tangent and the main tangent are parallel and a distance 28 from the main tangent to the secondary tangent is the 0.24 mm, which is 2% of cutting diameter 11. The extension and relationship between the secondary tangent 25 and the main tangent 26 is the equal in all cross sections along the axial extension of the exit opening 20.

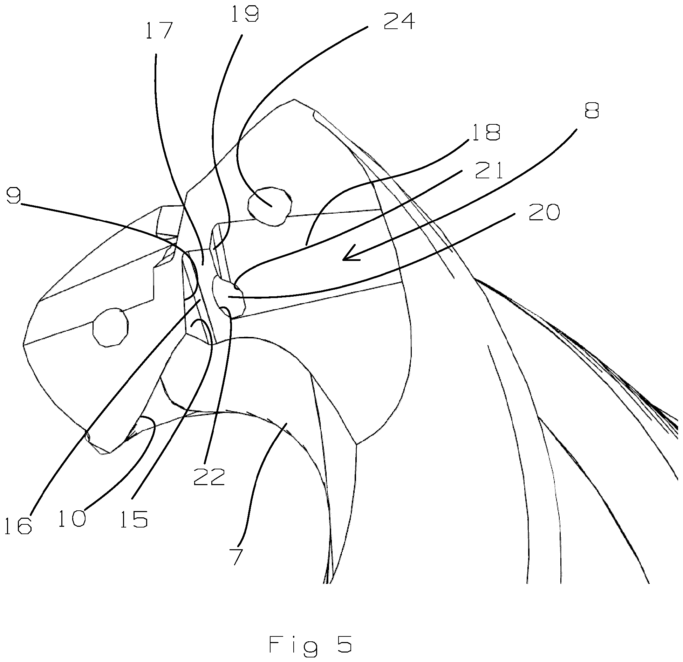

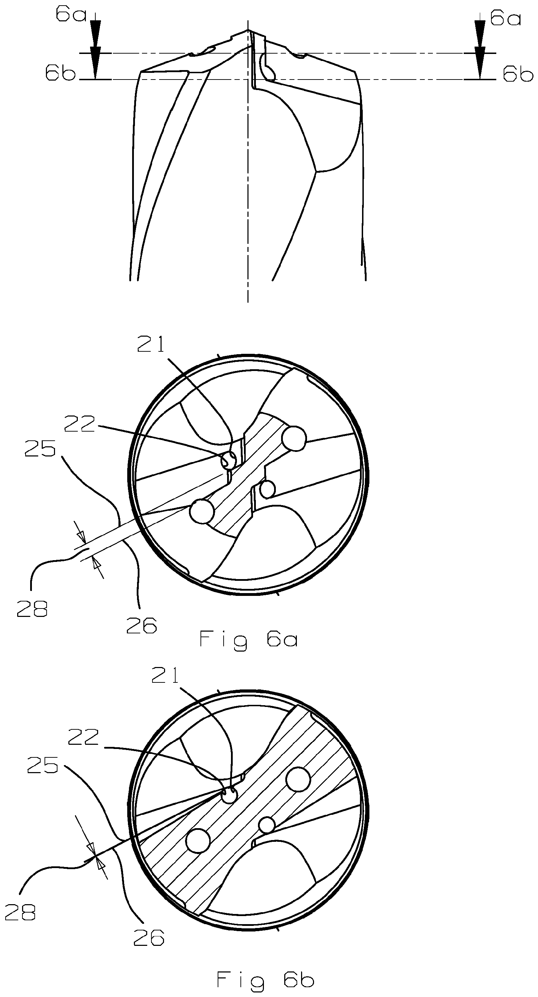

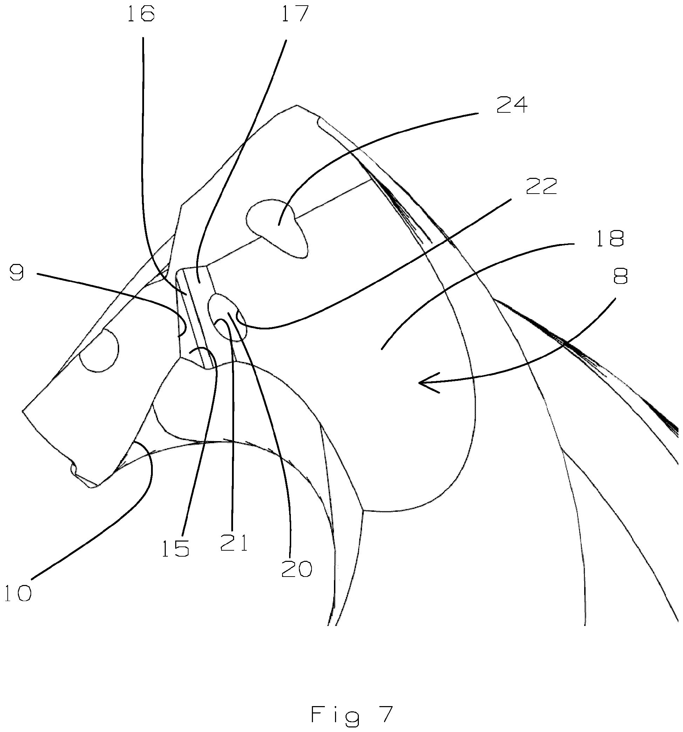

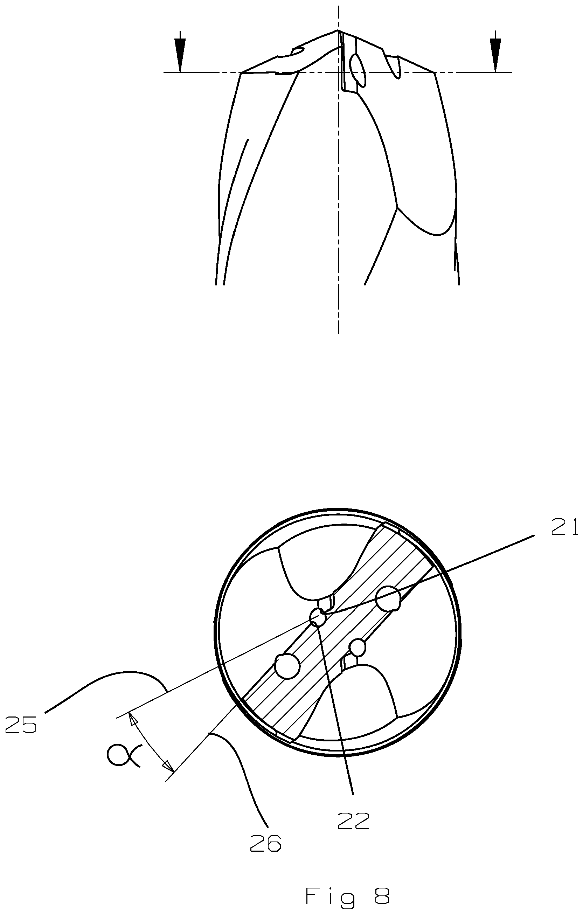

Figs. 5 and 6 show a twist drill comprising a drill point 1 according to a second embodiment of the present invention, and Figs 7 and 8 according to a third embodiment of the present invention. The following description is limited to describing mainly the differences between the second and third embodiments to the first embodiment, wherein the main difference is the design of the thinning surface 18.

Similar to the first embodiment, in the second embodiment, each of the primary thinning rake surface 15, the secondary thinning rake surface 17 and the main thinning rake surface 18 are planar. The main thinning surface 18 of the second embodiment differs from the main thinning surface 18 of the first embodiment by an axial inclination thereof. The main thinning surface 18 of the second embodiment, in an axial direction, is inclined rotationally forward relative the secondary thinning surface 17. Thereby, the distance 28 from the main tangent 26 to the secondary tangent 25 increases the further axially forward along an axial extension of the exit opening the cross section is located. The distance 28 is zero at an axially most rearward end of the inner opening edge 22 and 0.48mm at an axially most forward end of the inner opening edge 22. However, the main tangent 26 and the secondary tangent 25 are parallel in all the cross section along the axial extension of the exit opening 20. The thinning step surface 19 of the second embodiment is triangular instead of rectangular as in the first embodiment.

Similar to the first and second embodiments, also in the third embodiment, each of the primary thinning rake surface 15, the secondary thinning rake surface 17 and the main thinning rake surface 18 are planar. The main thinning surface 18 of the third embodiment differs from the main thinning surface 18 of the first embodiment by a radial inclination thereof. The main thinning surface 18 of the third embodiment, in a radial direction, is inclined rotationally forward relative the secondary thinning surface 17. An angle α between the main tangent 26 and the secondary tangent 25 is 15 °. The third embodiment lacks a step surface 19.

## Claims

1. A drill point (1) for metal cutting comprising a body, which
- body has a front end and a central longitudinal axis extending rearward from the front end,
- body is rotatable around the central longitudinal axis (3) in a direction of rotation (2), and wherein the central longitudinal axis (3) defines an axial direction and a radial direction, and
- body comprises one or more cutting structures,
wherein each cutting structure comprises
- a cutting edge (6), which extends radially outward from the central longitudinal axis (3), and comprises a radially inner cutting edge (9) and a radially outer cutting edge (10), wherein the cutting edge (6) defines a cutting diameter (11),
- a chip flute (7) which extends axially rearward from the radially outer cutting edge,
- a thinning surface (8), which extends axially forward and radially inward from the chip flute (7), wherein the thinning surface (8) comprises
- an exit opening (20) for discharging cutting fluid, which exit opening is delimited by an opening edge consisting of a radially inner opening edge (21) and a radially outer opening edge (22),
- a central, axially extending thinning bottom (16),
- a primary thinning rake surface (15), which, on a rotationally trailing side of the thinning bottom (16), extends from the thinning bottom (16) axially forward to the inner cutting edge (21),
- a secondary thinning rake surface (17), which, on a rotationally leading side of the thinning bottom (16), extends radially outward from the thinning bottom (16) and comprises at least a radially inner portion of the inner opening edge (21),
- a thinning main surface (18), which extends radially inward toward the secondary thinning rake surface (17) and comprises the outer opening edge (22),
**characterized in that**
as seen in a cross section, a secondary tangent (25) is a tangent to the secondary thinning rake surface (17) at the inner opening edge (21), wherein the secondary tangent (25) is rotationally rearward of the outer opening edge (22).

2. The drill point (1) according to claim 1, wherein a shortest distance (27) from the primary thinning rake surface (17) to the inner opening edge (21) is at most 10 % of cutting diameter (11).

3. The drill point (1) according to claim 1 or 2, wherein the exit opening (20) has a center (30), wherein a distance (29) from the center (30) to the opening edge is at most 5% of the cutting diameter (11).

4. The drill point (1) according to any preceding claim to claim 1 or 2, wherein the outer opening edge (22) is 45 - 55% of the of the opening edge.

5. The drill point (1) according to any claim 1 - 4, wherein the thinning surface (8) further comprises a thinning step surface (19), which intersects the exit opening edge and connects a radially outer portion of the secondary thinning rake surface (17) with a radially inner portion of the thinning main surface (18).

6. The drill point according to claim 1 - 5, wherein, as seen in a cross section, a main tangent (26) is a tangent to the thinning main surface (18) at the outer opening edge (22), wherein the main tangent (26) and the secondary tangent (25) are parallel.

7. The drill point according to claim 6, wherein, a distance (28) from the main tangent (26) to the secondary tangent (25) is equal in all cross sections along an axial extension of the exit opening (20).

8. The drill point according to claim 6, wherein, a distance (28) from the main tangent (26) to the secondary tangent (25) increases the further axially forward along an axial extension of the exit opening (20) the cross section is located.

9. The drill point according to claim 7 or 8, wherein the distance (28) from the main tangent (26) to the secondary tangent (25) is 1 - 3% of cutting diameter (11).

10. The drill point according to claim 1 - 5, wherein, as seen in a cross section, a main tangent is a tangent to the thinning main surface at the outer opening edge, wherein the main tangent and the secondary tangent diverge radially outward.

11. The drill point according to claim 10, wherein an angle α between the main tangent (26) and the secondary tangent (25) is 10 - 30°

12. The drill point according to any preceding claim, wherein, as seen in each cross section along an axial extension of the inner opening edge (21),
- the secondary tangent (25) coincides with a linear line of intersection of the secondary thinning surface (17) with the axial plane of the cross section.

13. The drill point according to any preceding claim, wherein, as seen in each cross section along an axial extension of the inner opening edge (21),
- a tangent to the thinning main surface (18) at the outer opening edge (22) is a main tangent (26),
- the main tangent (26) coincides with a linear line of intersection of the thinning main surface (18) with the axial plane of the cross section.

14. The drill point according to any preceding claim, wherein the body comprises two of the cutting structures, wherein each of the two cutting structures comprises a clearance surface (23) extending rotationally rearward from the respective cutting edge (6) to, at a radially inner end, the secondary thinning surface (17), and, at a radially outer end, the thinning main surface (18) of the cutting structure rotationally rearward thereof.

15. A twist drill comprising the drill point (1) according to any claim 1 - 14.
